(19) Europäisches Patentamt
European Patent Office
Office européen des brevets

(11) Veröffentlichungsnummer: **0 268 071**
**B1**

(12) # EUROPÄISCHE PATENTSCHRIFT

(45) Veröffentlichungstag der Patentschrift: **23.11.89**

(51) Int. Cl.⁴: **B01J 13/02**

(21) Anmeldenummer: **87114973.8**

(22) Anmeldetag: **13.10.87**

(54) **Mikrokapseln mit verbesserten Wänden.**

(30) Priorität: **22.10.86 DE 3635823**

(43) Veröffentlichungstag der Anmeldung: **25.05.88 Patentblatt 88/21**

(45) Bekanntmachung des Hinweises auf die Patenterteilung: **23.11.89 Patentblatt 89/47**

(84) Benannte Vertragsstaaten: **AT BE CH DE FR GB IT LI NL SE**

(56) Entgegenhaltungen: **FR-A-1 422 903**
**US-A-4 497 793**

(73) Patentinhaber: **BAYER AG, D-5090 Leverkusen 1 Bayerwerk(DE)**

(72) Erfinder: **Jabs, Gert, Dr., Wingensiefer Kamp 25, D-5068 Odenthal(DE)**
Erfinder: **Haas, Peter, Dr., Zwengenberger Strasse 43, D-5657 Haan 1(DE)**

**EP 0 268 071 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Mikrokapseln, hergestellt durch Grenzflächenpolyaddition zwischen Polyisocyanaten und Polyaminen sind bekannt und beispielsweise beschrieben in den Deutschen Offenlegungsschriften DE-A 2 109 335, 2 251 381, 2 242 910, 2 120 921, 2 311 712 und 2 523 586.

Verwendet man nach diesem Verfahren zur Vernetzung aliphatische Diamine, so ist die Thermostabilität bei dem entsprechenden Kapselwandpolymeren insbesondere im Kombination mit bisfunktionellen Polyisocyanaten niedrig. Dabei entstehen Mikrokapseln, die thermisch sehr instabil sind und auch unter Bedingungen der Feuchtealterung instabil werden.

Setzt man zur Vernetzung Diethylentriamin und dessen Homologe wie Triethylentetramin usw. ein, so ist eine höhere Thermostabilität auf diesem Wege nicht möglich. Aufgabe der Erfindung ist es, Mirkrokapseln mit verbesserter Thermostabilität bereitzustellen.

Gegenstand der Erfindung sind Mikrokapseln mit wenigstens einer Kapselwand, die ein Reaktionsprodukt wenigstens eines Isocyanats mit wenigstens einer isocyanatreaktiven Gruppe mit aktivem H-Atom enthält, dadurch gekennzeichnet, daß die isocyanatreaktive Verbindung ein Polyamin mit mindestens drei primären Aminogruppen ist.

Besonders bevorzugte Polyamine entsprechen folgender allgemeiner Formel (I)

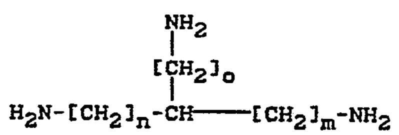
(I)

worin bedeuten
n = 2 bis 10, bevorzugt 4 bis 8,
m = 2 bis 10, bevorzugt 4 bis 8,
o = 0 bis 10, bevorzugt 0 bis 3.

Bevorzugte Isocyanate sind z.B. aliphatische, cycloaliphatische, araliphatische, aromatische und heterocyclische Polyisocyanate, wie sie z.B. von W. Siefken in Justus Liebigs Annalen der Chemie, 562, Seiten 75-136, beschrieben werden, beispielsweise Ethylen-Diisocyanat, 1,4-Tetra methylendiisocyanat, 1,6-Hexamethylendiisocyanat, 1,12-Dodecandiisocyanat, Cyclobutan-1,3-diisocyanat, Cyclohexan-1,3- und -1,4-diisocyanat, sowie beliebige Gemische dieser Isomeren, 1-Isocyanato-3,3,5-trimethyl-5-isocyanatomethyl-cyclohexan (DE-B 1 202 785, US-Patentschrift 3 401 190), 2,4- und 2,6-Hexahydrotoluylendiisocyanat, sowie beliebige Gemische dieser Isomeren, Hexahydro-1,3- und/oder -1,4-phenylen-diisocyanat, Perhydro-2,4'-und/ oder -4,4'-diphenylmethan-diisocyanat, 1,3-und 1,4-Phenylendiisocyanat, 2,4- und 2,6-Toluylendiisocyanat, sowie beliebige Gemische dieser Isomeren, Diphenylmethan-2,4'-und/oder -4,4'-diisocyanat, Naphthylen-1,5-diisocyanat, Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, m- und p-Isocyanatophenyl-sulfonylisocyanate gemäß der US-Patentschrift 3 454 606, perchlorierte Arylpolyisocyanate, wie sie z.B. in der deutschen Auslegeschrift DE-B 1 157 601 (US-Patentschrift 3 277 138) beschrieben werden, Carbodiimidgruppen aufweisende Polyisocyanate, wie sie in der deutschen Patentschrift DE-C 1 092 007 (US-Patentschrift 3 152 162) beschrieben werden, Diisocyanate, wie sie in der US-Patentschrift 3 492 330 beschrieben werden, Allophanatgruppen aufweisende Polyisocyanate, wie sie z.B. in der britischen Patentschrift GB-A 761 626 und der veröffentlichten holländischen Patentanmeldung NL-A 7 102 524 beschrieben werden. Isocyanuratgruppen aufweisende Polyisocyanate, wie sie z.B. in der US-Patentschrift 3 001 973, in den deutschen Patentschriften DE-C 1 022 789, 1 222 067 und 1 027 394, sowie in den deutschen Offenlegungsschriften DE-A 1 929 034 und 2 004 048 beschrieben werden, Urethangruppen aufweisende Polyisocyanate, wie sie z.B. in der belgischen Patentschrift 752 261 oder in der US-Patentschrift 3 394 164 beschrieben werden, acylierte Harnstoffgruppen aufweisende Polyisocyanate gemäß der deutschen Patentschrift DE-C 1 230 778, Biuretgruppen aufweisende Polyisocyanate, wie sie z.B. in der deutschen Patentschrift DE-C 1 101 394 (US-Patentschriften 3 124 605 und 3 201 372) sowie in der britischen Patentschrift 889 050 beschrieben werden, durch Telomerisationsreaktionen hergestellte Polyisocyanate, wie sie z.B. in der US-Patentschrift 3 654 106, beschrieben werden, Ethergruppen aufweisende Polyisocyanate, wie sie z.B. in der britischen Patentschriften 965 474 und 1 072 956, in der US-Patentschrift 3 567 763 und in der deutschen Patentschrift DE-C 1 231 688 genannt werden, Umsetzungsprodukte der oben genannten Isocyanate mit Acetalen gemäß der deutschen Patentschrift DE-C 1 072 385, polymere Fettsäurereste enthaltende Polyisocyanate gemäß der US-Patentschrift 3 455 883.

Es ist auch möglich, die bei der technischen Isocyanatherherstellung anfallenden Isocyanatgruppen aufweisenden Destillationsrückstände, gegebenenfalls gelöst in einem oder mehreren der vorgenannten Polyisocyanate, einzusetzen. Ferner ist est möglich, beliebige Mischungen der vorgenannten Polyisocyanate zu verwenden.

Geeignete modifizierte, aliphatische Isocyanate sind solche auf Basis von Hexamethylen-1,6-diisocyanat, m-Xylylendiisocyanat, 4,4'-Diisocyanatdicyclohexylmethan bzw. Isophorondiisocyanat, die pro Molekül mindestens zwei funktionelle Isocyanatgruppen aufweisen.

Ferner geeignet sind Polyisocyanate auf Basis von Derivaten des Hexamethylen-1,6-diisocyanats mit Biuretstruktur gemäß DE-B 1 101 394, DE-B 1 543 178, DE-A 1 568 017, DE-A 1 931 055.

Außerdem einsetzbar sind Polyisocyanato-polyuretonimine, wie sie durch Carbodiimidisierung von Biuretgruppen enthaltendem Hexamethylen-1,6-diisocyanat mit phosphororganischen Katalysatoren entstehen, durch weitere Umsetzung primär gebildeter Carbodiimidgruppen mit Isocyanatgruppen zu Uretonimingruppen.

Es können auch Isocyanurat-modifizierte Polyisocyanate mit mehr als zwei endständigen Isocyanatgruppen verwendet werden. Speziell ist in der DE-A 2 839 133 die Herstellung Isocyanurat-modifizierter Polyisocyanate auf Basis von Hexamethylendiisocyanat beschrieben. Die übrigen können analog erhalten werden.

Geeignet sind ferner die Isocyanate der Formel II

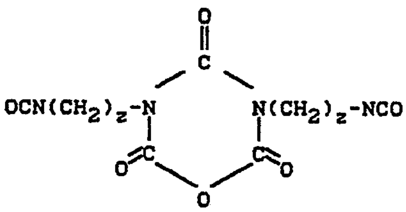

II

z =

Es können auch Gemische aus den genannten modifizierten aliphatischen und den genannten aromatischen Isocyanaten insbesondere Diphenylmethandiisocyanaten, die gegebenenfalls modifiziert sein können, verwendet werden.

Bevorzugte Isocyanate sind biuretisiertes Hexamethylendiisocyanat in Abmischung mit 4,4'-Diphenylmethandiisocyanat, gegebenenfalls mit 2,4-Anteil, trimerisiertes Hexamethylendiisocyanat in Abmischung mit 4,4'-Diphenylmethandiisocyanat, gegebenenfalls mit 2,4-Anteil und/oder Isocyanate der Formel (III) (Oxadiazintrion des HDI).

Weitere besonders bevorzugte Diisocyanate sind die in den deutschen Patentanmeldungen DE-C 3 105 776 und 3 521 126 angegebenen Alkylbenzoldiisocyanate und Alkoxybenzoldiisocyanate, die auch in Form ihrer Biuret-isocyanaturetdion-Oligomeren oder als Prepolymere verwendet werden können.

Die erfindungsgemäß einzusetzenden Amine lassen sich durch Kondensation cyclischer Lactame und anschließende Aminolyse und Hydrierung der Kondensate gewinnen.

Ein typischer Vertreter ist beispielsweise 1.6.11-Triaminoundecan, das durch Kondensation aus 2 Mol Caprolactam und Aminohydrierung gewonnen werden kann.

Die Herstellung dieser Verbindungen ist erstmals beschrieben von G. Nawrath, Angew. Chemie, 72, 1002 (1960) bzw. Deutsche Offenlegungsschrift DE-A 1 420 044.

Als Kernmaterial zur Einkapselung mit den erfindungsgemäßen Isocyanaten sind alle mit Wasser wenig mischbaren, hydrophoben Flüssigkeiten geeignet, beispielsweise aliphatische und aromatische Kohlenwasserstoffe, Halogenkohlenwasserstoffe, Ether, Ester, etc. die keine mit Isocyanat reagierende Gruppe enthalten.

Die Kernmaterialien können auch Feststoffe, beispielsweise Wirkstoffe, Pharmazeutika, Pestizide, Herbizide etc. gegelöst enthalten.

Gegenstand der Erfindung sind weiterhin Aufzeichnungsmaterialien mit erfindungsgemäßen Mikrokapseln.

Unter Aufzeichnungsmaterialien werden für die Zwecke der vorliegenden Erfindung insbesondere Materialien verstanden, auf denen durch bildmäßigen mechanischen Druck oder durch bildmäßiges Erhitzen sichtbare Darstellungen erzeugt werden können.

Hierzu gehören die bekannten Reaktionsdurchschreibepapiere (vgl. M. Gutcho, Capsule Technology and Mikroencapsulation, Noyes Data Corporation, 1972, Seiten 242-277; G. Baxter in Microencapsulation, Processes and Applications, herausgegeben von J.E. Vandegaer, Plenum Press New York, London, Seiten 127-143).

Reaktionsdurchschreibepapiere bestehen beispielsweise aus zwei oder mehreren lose aufeinandergelegten Papierblättern, wobei das jeweils obere auf der Rückseite eine Geberschicht und das jeweils untere auf der Vorderseite eine Nehmerschicht enthält. Es ist also jeweils eine Geberschicht und eine Nehmerschicht miteinander in Kontakt. Die Geberschicht enthält z.B. Mikrokapseln, deren Kernmaterial eine Lösung eines Farbstoffbildners in einem organischen Lösungsmittel ist und die Nehmerschicht enthält einen Farbentwickler, d.h. ein Material, das den Farbstoffbildner zum Farbstoff umwandelt. Eine Durchschrift entsteht, wenn die Mikrokapseln durch den Druck eines Schreibgerätes zerstört werden und der Farbstoffbildner mit dem Farbentwickler bildgemäß reagiert.

Wenn der Farbstoffbildner in einem schmelzbaren Wachs eingebettet ist statt in Mikrokapseln, entsteht eine Durchschrift, wenn das Papier bildgemäß erhitzt wird. Es handelt sich dann um ein thermoreaktives Aufzeichnungssystem.

Farbstoffbildner und Farbentwickler können auch auf demselben Papierblatt aufgebracht sein. Man spricht dann von "self contained paper". Auf solchem Material kann durch bildmäßigen Druck bzw. bildmäßiges Erhitzen z.B. eine Schrift erzeugt werden.

Thermoreaktive Aufzeichnungssysteme werden bevorzugt in elektronischen Rechnern, Fettdruckern, Fernschreibern und Meßinstrumenten verwendet. Man kann auf ihnen Markierungen auch mit Hilfe von Laserstrahlen erzeugen.

Thermoreaktive Aufzeichnungssysteme können so aufgebaut sein, daß der Farbstoffbildner in einer Bindemittelschicht gelöst oder dispergiert ist und in einer zweiten Schicht der Farbentwickler in demselben Bindemittel gelöst oder dispergiert ist. Farbstoffbildner und Farbentwickler können aber auch in einer Schicht dispergiert werden. Das Bindemittel wird durch Wärme erweicht und kommt an den Stellen, an denen Wärme angewendet wird, mit dem Farbentwickler in Kontakt. Dabei entwickelt sich die Farbe.

Im Falle der Verwendung der Kapseln für kohlefreie Durchschreibepapiere besteht das Kernmaterial vorzugsweise aus Lösungen von Farbstoffvorläufern.

Beispiele für Farbstoffvorläufer sind Triphenylmethanverbindungen, Diphenylmethanverbindungen, Xanthenverbindungen, Thiazinverbindungen, Spiropyranverbindungen.

Insbesondere sind geeignet: Triphenylmethanverbindungen: 3,3-Bis-(p-dimethylaminophenyl)-6-dimethylaminophthalid ("Kristallviolettlacton", nachstehend als "C.V.L." bezeichnet) und 3,3-Bis-(p-dimethylaminophenyl)-phthalid ("Malachitgrünlacton"), Diphenylmethanverbindungen: 4,4′-Bis-dimethylaminobenzhydrylbenzylether, N-Halogenphenylleucauramin, N-β-Naphthylleucauramin, N-2,4,5-Trichlorphenylleucauramin, N-2,4-Dichlorphenylleucauramin; Xanthenverbindungen; Rhodamin-β-anilinolactam, Rhodaminβ-(p-nitroanilin)-lactam, Rhodamin-β-(p-chloranilin)-lactam, 7-Dimethylamin-2-methoxy-fluoran, 7-Diethylamin-3-methoxyfluoran, 7-Diethylamin-3-methylfluoran, 7-Diethylamin-3-chlorfluoran, 7-Diethylamin-3-chlor-2- methylfluoran, 7-Diethylamin-2,4-dimethylfluoran, 7-Diethylamin-2,3-dimethylfluoran, 7-Diethylamin-(3-acetylmethylamin)-fluoran, 7-Diethyl-amin-3-methylfluoran, 3,7-Diethylaminfluoran, 7-Diethylamino-3-(dibenzylamin)fluoran, 7-Diethylamin-3-(methylbenzylamin)-fluoran, 7-Diethylamin-3-(chlorethylmethylamino)-fluoran, 7-Diethylamin-3-(dichlorethylamin)-fluoran, 7-Diethylamin-3-(diethylamin)-fluoran; Thiazinverbindungen: N-Benzoylleucomethylenblau, o-Chlorbenzoylleucomethylenblau, p-Nitrobenzoylleucomethylenblau; Spiroverbindungen: 3-Methyl-2,2′-spiro-bis-(benzo(f)-chromen).

Lösungsmittel, die diese Farbstoffvorläufer lösen, sind z.B. chloriertes Diphenyl, chloriertes Paraffin, Baumwollsamenöl, Erdnußöl, Siliconöl, Trikresylphosphat, Monochlorbenzol, ferner teilhydrierte Terphenyle, alkylierte Diphenyle, alkylierte Naphthaline, Arylether, Arylalkylether, höher alkyliertes Benzol und andere.

Häufig werden den Lösungsmitteln Verdünnungsmittel zugesetzt, wie beispielsweise Kerosin, n-Paraffine, Isoparaffine.

Zur Herstellung der Mikrokapseln nach dem Polyadditionsverfahren wird das Isocyanat in den genannten hydrophoben Kernmaterialien gelöst und diese organische Phase in der kontinuierlichen wäßrigen Phase, die Schutzkolloid und gegebenenfalls emulgatoren enthalten kann, emulgiert. Zur Emulsion gibt man eine wäßrige Polyaminlösung in stöchiometrischer Menge zum Polyisocyanat in der organischen Phase.

Zur Emulgierung und Stabilisierung der gebildeten Emulsion werden der wäßrigen Phase Schutzkolloide und Emulgierhilfsmittel zugesetzt. Beispiele für solche als Schutzkolloide wirkende Produkte sind Carboxymethylcellulose, Gelatine und Polyvinylalkohol. Beispiele für Emulgatoren sind oxethyliertes 3-Benzylhydroxybiphenyl, Umsetzungsprodukte von Nonylphenol mit unterschiedlichen Mengen Ethylenoxid und Sorbitanfettsäureester.

Die Mikrokapseln können kontinuierlich oder diskontinuierlich hergestellt werden. Man verwendet im allgemeinen Dispergiergeräte, die ein Schergefälle erzeugen. Beispiele hierfür sind Blatt-, Korb-, Schnellrührer, Kolloidmühlen, Homogenisatoren, Ultraschalldispergatoren, Düsen, Stahldüsen, Supratonmaschinen. Die Stärke der Turbulenz beim Vermischen ist in erster Linie bestimmend für den Durchmesser der erhaltenen Mikrokapseln, Kapseln in der Größe von 1 bis 2000 μm können hergestellt werden. Bevorzugt sind Kapseln mit Durchmessern von 2 bis 20 μm.

Die hochkonzentrierten Suspensionen können nach einer kurzen weiteren Nachbehandlung direkt für den jeweils vorgesehenen Einsatzzweck verwendet werden.

Die Suspensionen lassen sich beispielsweise durch Sprühtrocknung in agglomeratfreie Kapselpulver überführen. Die Sprühtrocknung ist bei derartig konzentrierten Suspensionen besonders rationell, da die zu verdampfende Menge Wasser vergleichsweise gering ist.

Die Farbstoffvorläufer enthaltenden Mikrokapseldispersionen können beispielsweise zur Herstellung kohlefreier Durchschreibepapiere verwendet werden.

Hierzu werden die erfindungsgemäßen Suspensionen mit Bindemitteln und Abstandshaltern versehen und auf eine Papierträgerbahn aufgestrichen. Die Formulierung derartiger Streichfarben ist längst bekannter Stand der Technik.

Vorteilhafterweise können jedoch beim erfindungsgemäßen Verfahren hochkonzentrierte Streichmassen verwendet werden und dabei die Trocknung der Beschichtungsmassen rationeller gestaltet werden.

Insbesondere gestattet das erfindungsgemäße Verfahren den Einsatz anderer Beschichtungstechniken, wie beispielsweise den Auftrag mit bladecoater oder mittels Gravurwalzen. Derartige Beschichtungstechniken sind bereits bekannt, ließen sich bisher jedoch nicht für kapselhaltige Streichmassen rationell einsetzen, da bisher nur Dispersionen niedriger Konzentrationen möglich waren. Diese Auftragstechniken gestatten einen wesentlich schnelleren Auftrag der Beschichtungsmassen als beispielsweise eine Beschichtung mit Luftrakel, wie sie bei der Herstellung der Kapsel-Papiere bislang üblicherweise verwendet wurde.

Das Auftragsverfahren mit Gravurwalzen stellt bereits ein modifiziertes, wäßriger "Tiefdruck"-Verfahren dar.

Es ist auch möglich, die erfindungsgemäßen Suspensionen aufgrund des hohen Kapselgehaltes direkt, ohne aufwendige Aufkonzentrierung, zur Herstellung wäßriger Flexodruckpasten zu verwenden. Die Herstellung kapselhaltiger Flexodruckpasten und die Herstellung von vollflächig oder partiell beschichteter Durchschreibepapiere ist bereits bekannt. Der Vorteil beim Einsatz der erfindungsgemäßen Suspensionen besteht darin, daß bislang notwendige Aufkonzentrierungen entfallen können.

Als Reaktionspartner für die Farbstoffvorläufer in den Mikrokapseln können an sich bekannte Farbentwickler eingesetzt werden, wie beispielsweise saure Tone, Montmorillonit, Bentonite und Smectite oder synthetische Phenolharze.

Die Geberkomponente ist im allgmeinen bei Durchschreibesätzen die Rückseite des Oberblattes. Die Vorderseite des nächsten Blattes ist mit der zweiten Farbgeberkomponente beschichtet. Man bezeichnet diese Schicht als Nehmerkomponente. Bei Durchschreibesätzen ist die Nehmerkomponente die Oberseite des zweiten Papierblattes. Bei Mehrfachdurchschreibesätzen müssen die folgenden Geberblätter auf der Gegenseite eine Nehmerbeschichtung tragen. Die Herstellung solcher Nehmerschichten ist bekannt und ebenfalls in den deutschen Offenlegungsschriften DE-A 1 934 457 und 1 955 542 beschrieben.

Weitere Einzelheiten zur Durchführung des erfindungsgemäßen Verfahrens sind den nachfolgenden Beispielen zu entnehmen.

Beispiel 1

84,5 Teile Diisopropylnaphthalin und 84,5 Teile Dodecylbenzol werden gemischt und in dieser Mischung 8,8 Teile eines schwarzentwickelnden Fluoranfarbgebers (Pergascript Schwarz IBR der Fa. Ciba Geigy) unter Rühren und Erwärmen auf 80° C gelöst. Zu dieser Lösung werden 22 Teile eines Oxadiazintrions von Hexamethylendiisocyanat (NCO-Gehalt 20,5 %) gegeben. Dieses Gemisch wurde zusammen mit 220 Teilen einer 0,5 %, teilverseiftes Polyvinylacetat enthaltenden wäßrigen Lösung an einem Rotor-Stator-Emulgiergerät emulgiert, bis eine Tröpfchengröße von 7 µm erreicht war.

Zu dieser Emulsion wurde unter Rühren bei 30° C 79,5 Teile einer 9 %igen wäßrigen Lösung eines Amins der Formel (I) mit m = n = 5 und o = 0 gegeben.

Anschließend wurde die Dispersion auf 60° C erwärmt und weitere 3 Stunden bei deiser Temperatur nachbehandelt.

Es wurde eine 40 %ige Mikrokapseldispersion erhalten.

Zur Messung der Temperaturstabilität wurden die Kapseln auf ein handelsübliches CF-Papier auf die beschichtete Seite aufgestrichen (3 g/m² Kapseln). Das farblose Papier wurde auf eine Kofler-Bank gelegt und die Temperatur bestimmt, bei der durch Temperatureinfluß die Kapseln zerstört wurden und dadurch eine deutliche Schwarzfärbung des Papiers eintrat. Diese Temperatur betrug 151° C.

Beispiel 2

Die gleiche Farbgeberlösung wie in Beispiel 1 wurde mit 19,8 Teilen biuretisiertem Hexamethylendiisocyanat (NCO-Gehalt 19,8 %) und 2,2 Teile Polymethylenpolyphenylpolyisocyanat (MDI) versetzt.

Die nachfolgende Emulgierung geschah ebenso wie in Beispiel 1 beschreiben.

Anschließend erfolgt die Zugabe von 47,3 Teilen einer 9 %igen wäßrigen Lösung eines Amins der Formel (I) mit m = n = 5 und o = 0 zu der Emulsion.

Anschließend wurde die Dispersion auf 60° C erwärmt und weitere 3 Stunden bei dieser Temperatur nachbehandelt.

Testet man die so erhaltene 40 %ige Mikrokapseldispersion wie in Beispiel 1 beschrieben auf Temperaturstabilität, ermittelt man eine Grenztemperatur von 158° C.

Beispiel 3 (Vergleichsbeispiel)

Es wurde genau wie im Beispiel 1 verfahren, mit dem Unterschied, daß die Vernetzung der Emulsion mit 44,4 Teilen einer wäßrigen, 9 %igen Lösung von Diethylentriamin anstelle der erfindungsgemäßen Aminvernetzer erfolgte.

Wiederholt man mit der so hergestellten Dispersion den in Beispiel 1 beschriebenen Temperaturtest, so stellt man fest, daß die so hergestellte Kapsel nur bis 108° C stabil ist.

## Patentansprüche

1. Mikrokapseln mit wenigstens einer Kapselwand, die ein Reaktionsprodukt wenigstens eines Isocyanats mit wenigstens einer isocyanatreaktiven Gruppe mit aktivem H-Atom enthält, dadurch gekennzeichnet, daß die isocyanatreaktive Verbindung ein Polyamin mit mindestens drei primären Aminogruppen ist.

2. Mikrokapseln nach Anspruch 1, dadurch gekennzeichnet, daß das Polyamin folgender Formel (I) entspricht:

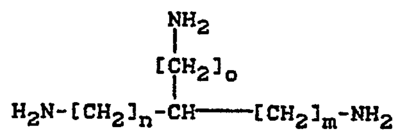

(I)

worin bedeuten
n = 2 bis 10,
m = 2 bis 10,
o = 0 bis 10,

3. Aufzeichnungsmaterialien mit Mikrokapseln, dadurch gekennzeichnet, daß Mikrokapseln gemäß wenigstens einem der vorhergehenden Ansprüche enthalten sind.

4. Verfahren zur Herstellung von Mikrokapseln nach dem Polyadditionsverfahren, wobei man ein aliphatisches, cycloaliphatisches, araliphatisches, aromatisches oder heterocyclisches Polyisocyanat gegebenenfalls zusammen mit hydrophoben Kernmaterialien in einer mit Wasser wenig mischbaren hydrophoben Flüssigkeit löst, diese in einer kontinuierlichen wäßrigen Phase, die ein Schutzkolloid und gegebenenfalls Emulgatoren enthält, emulgiert, dadurch gekennzeichnet, daß man der Emulsion eine wäßrige Lösung eines Polyamins mit mindestens drei primären Aminogruppen in Stöchiometrischer Menge zum Polyisocyanat zufügt.

## Claims

1. Microcapsules with at least one capsule wall which contains a reaction product of at least one isocyanate with at least one isocyanate-reactive group with an active H atom, characterized in that the isocyanatereactive compound is a polyamine with at least three primary amino groups.

2. Microcapsules according to Claim 1, characterized in that the polyamine corresponds to the following formula (I):

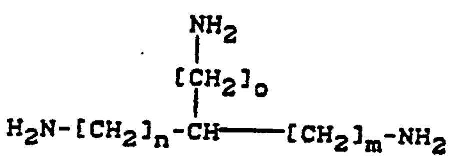

(I)

wherein

n denotes 2 to 10,
m denotes 2 to 10 and
o denotes 0 to 10.

3. Recording materials with microcapsules, characterized in that they contain microcapsules according to at least one of the preceding claims.

4. Process for the preparation of microcapsules by the polyaddition process, wherein an aliphatic, cycloaliphatic, araliphatic, aromatic or heterocyclic polyisocyanate is dissolved in a hydrophobic liquid of low water-miscibility, if appropriate together with hydrophobic core materials, and this solution is emulsified in a continuous aqueous phase containing a protective colloid and if appropriate emulsifiers, characterized in that an aqueous solution of a polyamine with at least three primary amino groups in a stoichiometric amount relative to the polyisocyanate is added to the emulsion.

**Revendications**

1. Microcapsules ayant au moins une paroi de capsule contenant un produit de réaction d'au moins un isocyanate avec au moins un groupe à atome d'hydrogène actif réactif avec les isocyanates, caractérisées en ce que le composé réactif avec les isocyanates est une polyamine contenant au moins trois groupes amino primaires.

2. Microcapsules selon la revendication 1, caractérisées en ce que la polyamine répond à la formule I

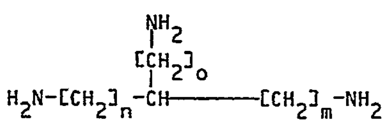

(I)

dans laquelle
n = 2 à 10
m = 2 à 10
o = 0 à 10.

3. Matériaux d'enregistrement à microcapsules, caractérisés en ce qu'ils contiennent des microcapsules selon au moins une des revendications précédentes.

4. Procédé de préparation de microcapsules par le principe de polyaddition, dans lequel on dissout un polyisocyanate aliphatique, cycloaliphatique, araliphatique, aromatique ou hétérocyclique, éventuellement avec des matières de noyau hydrophobes, dans un liquide hydrophobe peu miscible à l'eau, on émulsionne cette solution dans une phase aqueuse continue contenant un colloïde protecteur et le cas échéant des agents émulsionnants, caractérisé en ce que l'on ajoute à l'émulsion une solution aqueuse d'une polyamine à au moins trois groupes amino primaires en quantité théorique par rapport au polyisocyanate.